# EUROPEAN PATENT SPECIFICATION

(11) **EP 1 684 597 B1**
(45) Date of publication and mention of the grant of the patent: **16.01.2008**
(21) Application number: 04791612.7
(22) Date of filing: 29.10.2004
(51) Int. Cl.: A23L 1/30, A61K 36/00, A23D 7/005, C07C 62/32

(54) **FOOD PRODUCT COMPRISING AN EXTRACT FROM PINE NEEDLES**
NAHRUNGSMITTEL MIT KIEFERNNADELEXTRAKT
PRODUIT ALIMENTAIRE COMPRENANT UN EXTRAIT A BASE D'AIGUILLES DE PIN

(30) Priority: 30.10.2003 EP 03256869
(43) Date of publication of application: 02.08.2006
(73) Proprietor: Lipid Nutrition B.V., 1521 AZ Wormerveer (NL)
(72) Inventor: YAN, Youchun, NL-1521 AZ Wormerveer (NL); CAIN, Frederick William, NL-1521 AZ Wormerveer (NL); SCHMID, Ulrike, NL-1521 AZ Wormerveer (NL); STAM, Wiro, NL-1521 AZ Wormerveer (NL); GERRITSEN, Jeanet, NL-1521 AZ Wormerveer (NL)
(74) Representative: Stevens, Ian Edward
(86) International application number: PCT/GB2004/004575
(87) International publication number: WO 2005/051103

(56) References cited:
- EP-A- 1 129 711
- WO-A-20/04064757
- US-A- 5 466 453
- US-B1- 6 190 680
- US-B1- 6 329 000
- DATABASE WPI Derwent Publications Ltd., London, GB; AN 1997-272844 XP002272810 DONG Y, WANG S, ZHANG R: "Method for extracting raw pine needle juice" & CN 1 102 111 A (DONG Y) 3 May 1995 (1995-05-03)
- LEE Y-H ET AL: "THE CHOLESTEROL-LOWERING EFFECTS OF THE EXTRACT FROM PINUS STOBUS IN CHICKENS" HANGUG NYENNYAN SIGRYAN HAGHOI JI - JOURNAL OF THE KOREAN SOCIETY OF FOOD AND NUTRITION, PUSAN, KR, vol. 25, no. 2, 1996, pages 188-192, XP001026939 ISSN: 0253-3154
- DATABASE WPI Derwent Publications Ltd., London, GB; AN 2002-203307 XP002272811 JEONG CB: "Production of steamed bread" & KR 2001 091 281 A (JEONG CB) 23 October 2001 (2001-10-23)
- DATABASE BIOSIS BIOSCIENCES INFORMATION SERVICE, PHILADELPHIA, PA, US; Phyton (Horn) 1978; 18: 3-4 1980, LINDNER W, GRILL D: "Acids in conifer needles" XP002311085 Database accession no. 198069060322
- DATABASE WPI Week 2001 Derwent Publications Ltd., London, GB; AN 2001-495315 XP002311086 LEE HG, LEE SJ, LEE YH, PARK SY: "Novel melanin biosynthesis inhibitor" & KR 2001 017 516 A (HAI TAI CONFECTIONARY CO LTD) 5 March 2001 (2001-03-05)

## Description

This invention relates to a food product, in particular a foodstuff comprising a fat continuous emulsion.

Fat continuous emulsions are contained in a number of foodstuffs, including margarines and low fat spreads. Low fat spreads are disclosed in US 4917915, for example. The fat phase is responsible for at least part of the oral properties of the foodstuffs. Certain low fat spreads are marketed for their health properties, including the ability to reduce cholesterol.

WO 98/28990 discloses a method of preparing food seasonings, food ingredients and food items using plant sterols and/or stanols together with raised levels of one or more of magnesium, calcium and potassium. Ingestion of the food is said to lead to a decrease in both cholesterol level and blood pressure.

There remains a need for food products comprising a fat continuous emulsion that have improved properties, including butter-like appearance and oral properties. There is also a need for food products of this type that have other health benefits and/or improved health properties.

Pine needles are the leaves of plants of the Pinaceae family, including the genus *Pinus.* Certain types of pine needles are available in abundant supply and have been used for various purposes. Pine needle extracts have been described as being useful in specific beverages in JP 08107778 A and JP 07059538. Rice cakes containing pine needle extracts are described in JP 01218562 A.

A process for the extraction of taxol from pine needles is described in WO 94/15483.

High blood pressure (or hypertension) is known to be associated with many medical problems. High blood pressure directly increases the risk of coronary heart disease and stroke. High blood pressure most predominantly occurs in people over 35 years old but environmental and genetic factors and some medical conditions, such as diabetes mellitus, gout or kidney disease can lead to an increased risk of high blood pressure in people of all ages.

US 6,329,000 discloses the use of certain pine needle extracts for treating various diseases including myocarditis, angina, arrhythmia, diabetes, senile dementia, sudden deafness and hypertension. The pine needle extracts are obtained by a relatively simple extraction using water and alcohol as solvents.

US 5,607,971 discloses the extraction of vasoactive lipids from Pinus ponderosa using methanol, diethyl ether and methylene chloride. The compounds isolated are esterified alkanediols.

US 5,690,984 describes a beverage made from pine needles by boiling the needles in water at high pressure in a pressure vessel together with a mixture of other natural products.

Pine needles and their extracts may contain isocupressic acids. Isocupressic acids have been described as causing toxicity problems in beef cattle. It has been found that in US 6,329,000, US 5,607,971 and US 5,690,984, a substantial amount of isocupressic acid remains in the extracts.

US 5,466,453 teaches a method for improving the taste of a pine extract. US 6,254,858 relates to a hair treatment composition containing, amongst other components, pine juices. US 187,802 describes a disinfecting composition containing maple sugar and extracts of pine needles and juniper berries. The inventors believe that the products will contain substantial amounts of isocupressic acid.

CN-A-1102111 describes the preparation of raw pine needle juice.

Pine needle extracts have now been found to be useful for incorporation into food products comprising a fat continuous emulsion.

According to the invention, there is provided a food product comprising a fat continuous emulsion, wherein the emulsion comprises a material comprising one or more organic compounds, said material being obtainable as an extract from pine needles.

The extract is preferably an aqueous extract. When the extract is an aqueous extract, the food product comprises an aqueous phase and the material is preferably present in the aqueous phase.

The material preferably comprises at least 2 components A and B, wherein A is a compound that is obtainable from a mixture of A and B, such as pine needles, by elution from a silica column using 100 % methanol as eluent and B is a compound obtainable from the same silica column using methanol/water mixtures (5-40 % by volume) in a series of subsequent elutions. A is preferably selected from the group consisting of phytosterol, polyphenols, bioflavonoids, tannins, organic acids and their complexes. B is preferably selected from the group consisting of amino acids, peptides, proteins, quercetin, terpenoids, flavonol glycosides, biflavones, proanthocyanidins, polyprenols, lignans and minerals. The material may comprise one or more compounds A and one or more compounds B. Preferably, the material comprises A (or total A compounds where more than one A compound is present) in an amount of from 5 to 60 wt %, preferably 10 to 50 wt%, most preferably 15 to 40 wt%, and the material comprises B (or total B compounds where more than one B compound is present) in an amount of from 1 to 15 wt %, preferably 2 to 12wt %, most preferably 3 to 10 wt%, based on the weight of the material.

Therefore, in one embodiment, the material comprises at least one compound selected from the group consisting of phytosterol, polyphenols, bioflavonoids, tannins, organic acids and their complexes and at least one compound selected from the group consisting of amino acids, peptides, proteins, quercetin, terpenoids, flavonol glycosides, biflavones, proanthocyanidins, polyprenols, lignans and minerals.

The material preferably contains isocupressic acid compounds in an amount of less than 0.005 wt%, more preferably less than 0.003 wt%, even more preferably less than 0.002 wt% such as less than 0.001 wt%. The terms "isocupressic acid compounds" and "isocupressic acids" are used synonymously herein and refer to isocupressic acid itself and and preferably related diterpene acids found in pine needles and their extracts, such as imbricatoloic acid, agathic acid, dihydroagathic acid and tetrahydroagathic acid. Isocuppressic acids may be in the form of derivatives of these acids, for example, acetylimbricatoloic acid and acetylisocupressic acid. Preferably, therefore, the material of the invention contains isocupressic acid, imbricatoloic acid, agathic acid, dihydroagathic acid, tetrahydroagathic acid, acetylimbricatoloic acid and acetylisocupressic acid in an amount of less than 0.005 wt%, more preferably less than 0.003 wt%, even more preferably less than 0.002 wt% such as less than 0.001 wt%. Preferably, the material is free of isocupressic acids or substantially free of isocupressic acids (i.e., to the extent that the presence of isocupressic acids cannot be detected by conventional techniques and/or has no effect on the properties of the composition). The level of isocupressic acids can be determined, for example, by GCMS.

The material is obtainable, and is preferably obtained, from pine needles. Pine needles are preferably from species of pine other than *Pinus ponderosa.* Pine species include *Pinus albicaulis, Pinus aristata, Pinus attenuata, Pinus balfouriana, Pinus banksiana, Pinus bungeana, Pinus cembra, Pinus cembroides, Pinus clausa, Pinus contorta, Pinus coulteri, Pinus densiflora, Pinus echinata, Pinus edulis, Pinus elliottii, Pinus engelmannii, Pinus f lexilis, Pinus glabra, Pinus heldreichii, Pinus jeffreyi, Pinus lambertiana, Pinus longaeva, Pinus massoniana, Pinus monophylla, Pinus monticola, Pinus mugo, Pinus muricata, Pinus nigra, Pinus palustris, Pinus parviflora, Pinus pungens, Pinus quadrifolia, Pinus radiata, Pinus resinosa, Pinus rigida, Pinus sabiniana, Pinus serotina, Pinus strobiformis, Pinus strobus, Pinus sylvestris, Pinus tabulaeformis, Pinus taeda, Pinus thunbergiana, Pinus torreyana, Pinus virginiana, Pinus yuannensis* and *Pinus washoensis.* Preferably, the material is from *Pinus massoniana, Pinus tabulaeformis* or *Pinus yuannensis,* more preferably, the material is from *Pinus massoniana.* The material preferably comprises one or more organic compounds, more preferably two or more organic compounds. Organic compounds are compounds that comprise carbon, hydrogen and oxygen atoms and optionally other atoms such as nitrogen, phosphorus and sulphur.

Materials of the invention preferably comprise shikimic acid and/or quinic acid. Shikimic acid is preferably present in the materials of the invention in an amount by weight of the material of at least 10 %, preferably at least 12 %, more preferably at least 15 %, such as at least 16 %, at least 17 %, at least 18 %, at least 19 % or at least 20 %. The upper limit for the amount of shikimic acid is typically no more than 50 %, more preferably no more than 40 %, such as no more than 30 %, or no more than 25 %, again by weight of the material. The shikimic acid may be present as a salt or other derivative, such as an acetyl ester.

Quinic acid (typically as D-quinic acid) is preferably present in the materials of the invention in an amount by weight of the material of at least 5 %, preferably at least 6 %, more preferably at least 7 %, such as at least 8 %, at least 9 %, at least 10 %, at least 12 % or at least 15 %. The upper limit for the amount of quinic acid is typically no more than 30 %, more preferably no more than 27 %, such as no more than 25 %, or no more than 20 %, again by weight of the material. The quinic acid may be present as a salt or other derivative, such as an acetyl ester.

Specific preferred materials of the invention comprise shikimic acid and quinic acid in the amounts specified in the preceding two paragraphs. An example of such a material comprises at least 10 % by weight shikimic acid and at least 5 % by weight quinic acid, such as 10 % to 30 % shikimic acid and 5 % to 20 % quinic acid.

Materials of the invention may further comprise low molecular weight sugars, preferably sugars having a molecular weight below 1000 Daltons. Preferred low molecular weight sugars are monosaccharide units and include glucose, fructose and inositol. The amount of low molecular weight sugars is preferably from 15 % to 50 % by weight, such as 20 % to 40 %, or 20 % to 35 % by weight of the material.

The material is preferably obtainable by a process which comprises the following steps:
treating pine needles with a solvent selected from water, organic solvents and mixtures thereof (preferably water), preferably at an elevated temperature of from 40 °C to 110 °C, to form a first extract;
removing isocupressic acid compounds from the first extract, preferably by treatment with an ion exchange resin and/or activated carbon (preferably whilst the first extract is in aqueous solution, more preferably at an elevated temperature); and
optionally, filtering and concentrating the treated extract to obtain the material as a powder or a concentrate. Preferably, prior to step (a), the pine needles are pretreated with a non-polar solvent (e.g, an alkane having from 4 to 10 carbon atoms, such as hexane), more preferably at a temperature of from 40 °C to 90 °C. This pretreatment typically removes at least a part of the isocupressic acids.

The food product can consist of, or consist essentially of, the fat continuous emulsion (e.g., in the case of certain margarines or low fat spreads). Thus, the fat continuous emulsion can constitute all of the food product. Alternatively, the food product can contain the fat continuous emulsion together with one or more other food ingredients or additives.

The fat continuous emulsion preferably has a fat content of from 0.5 to 99.5 wt%, preferably 20 to 85 wt%, most preferably 30 to 80 wt%, based on the weight of the food product. Water is preferably present in the food product in an amount of from 0.5 to 99.5 wt%, more preferably 10 wt% to 50 wt%. The food product thus preferably comprises an aqueous phase and a fat phase.

The solid fat content of the fat in the fat continuous emulsion can conveniently be determined by measuring the NMR N-value as described in Fette, Seifen, Anstrichmittel, 80 (1978), 180-186, which indicates the amount of fat present in the solid state expressed in percentage of the weight of the fat. The fat phase preferably displays a solid fat content (measured by NMR. on a non-stabilised fat) at 5°C (=N5) of >10, more preferably >20, and a solid fat content at 35°C (=N35) of <20, preferably <10, most preferably <5. Non-stabilised means that the N-value is measured after first melting the fat above 80° C, whereupon the melt is cooled to 0° C and kept at 0° C for 30 minutes, then the fat is heated to the measurement temperature and kept at that temperature for 30 minutes, whereupon the N-value is measured.

One embodiment of the invention is a food product comprising fat and water and having a fat content of from 0.5 to 99.5 wt %, wherein the fat phase comprises at least two components (D) and (E), (D) having an N20>20 and (E) having a content of mono- and di-unsaturated fatty acid residues of at least 25 wt%. Component (D) is preferably selected from the group consisting of palm fractions, interesterified hardened palm oil and hardened palm kernel oil and fractions thereof, interesterified mixtures of liquid oils and hardened liquid oils, interesterified fractions of palm kernel oil and palm oil, particularly palm kernel stearine and palm oil stearine, and fractions thereof, and fats containing at least 20 wt % of SUS triglycerides. Preferably, (E) has a content of mono- and di-unsaturated fatty acid residues of from 55 to 95 wt% and examples of component (E) include oils selected from the group consisting of sunflower oil, high oleic sunflower oil, rape seed oil, high oleic rape seed oil, palm oil olein, corn oil, soybean oil and high oleic soybean oil. The weight ratio of (D) to (E) is preferably from 10:1 1 to 1:20, more preferably from 1:1 to 1:15, even more preferably from 1:4 to 1:10.

Preferably, the food products of the invention are essentially free of trans fatty acids (which are carboxylic acids containing from 12 to 24 carbon atoms and having one carbon-carbon double bond) i.e., they contain trans fatty acids in an amount of less than 1% by weight, preferably less than 0.5% by weight, more preferably less than 0.1% by weight, such as less than 0.05% or less than 0.01% by weight.

The food product preferably contains the material in an amount of from 0.01wt% to 20wt% (e.g., 0.01wt% to 1 wt%), more preferably from 0.05wt% to 15wt% (e.g., 0.05wt% to 1 wt%), even more preferably from 0.1wt% to 12wt% (e.g., 0.1wt% to 1 wt%), based on the total weight of the food product and on the weight of the dry material.

The food product of the invention preferably has one or more of the following properties compared to a corresponding product that does not contain the material: increased hardness, improved texture, increased aeration, improved spreadability, improved oral properties, improved mouthfeel, improved flavour impact, better colour, improved viscosity, increased ease of processing and improved health properties. The properties are improved compared to an otherwise identical food product that does not contain the material. Preferred properties that are improved according to the invention are oral properties and/or visual appearance, in particular increased similarity to butter in terms of oral properties and/or visual appearance.

Increased hardness of the food product is a particularly preferred advantage of the invention. The increased hardness is, for example, evident when the product is spread onto a substrate with a knife.

The material of the invention has therapeutic activity. The term "therapeutic activity" in this context means usefulness in the treatment, inhibition or prevention of diseases or disorders. Diseases and disorders include, but are not limited to, high blood pressure (hypertension). In one aspect, the invention provides a food product of the invention, for use to lower blood pressure in mammals, particularly humans.

The invention may involve one or more of the following effects: lowering blood pressure; lowering systolic and/or diastolic blood pressure; reducing heart rate; reducing sympathetic nerve activity; reducing the chance of coronary heart disease; reducing the chance of aneurisms; reducing the chance of strokes; improving blood circulation; improving the cardiovascular system; improving blood vessel health; reducing stress on smooth muscle tissue; reducing the chance of chest pains; providing part of a healthy lifestyle; improving the chance of healthy circulation; reducing the effect of aging on the blood vessels; reducing cardiac stress; and improving recovery time after exercising.

The invention also involves a method of lowering blood pressure (and/or treating hypertension) in a mammal which comprises the provision of an effective amount of a food product of the invention. The invention further contemplates the use of a food product of the invention in the manufacture of a composition for treating and/or preventing hypertension.

Preferred food products of the invention are margarines, low fat spreads, bakery spreads and cooking spreads. These products may be packaged and labelled for sale and are typically stored at low temperature (e.g., below 15°C). Preferred packaging includes containers with lids, preferably of plastics material and of a size sufficient to hold from 25 g to 1 kg of the food product.

Margarines and spreads can be made by using conventional techniques for the preparation of margarines, low fat spreads or very low fat spreads (less than 40wt% fat) (as disclosed for example in EP. 089082, the contents of which are incorporated herein by reference).

A spread preferably has a continuous fat phase to give it suitable spreadability and to prevent microbiological deterioration. It should not release moisture when it is being spread. Furthermore, a spread should preferably be spreadable at refrigerator temperature (5°C), be stable at room temperature (20°C), but destabilize and release its flavour in the mouth.

The margarine or spread is a dispersion having a plastified continuous fat phase and a dispersed aqueous phase. As is common practice with respect to products of this kind, the term "continuous fat phase" is meant to include the oil present in the liquid state and forming a continuous phase as well as the solid fat particles contained in the liquid oil that have been phase-separated from the liquid oil by crystallization of fat by the plastification treatment. The "continuous fat phase" does not, however, include any fat contained in the dispersed aqueous phase, as occurs e.g., in a product having a so-called oil-in-water-in-oil structure.

The aqueous phase may comprise, apart from water, a gelling agent and, optionally, a thickener and/or one or more other ingredients that are commonly incorporated in margarines and spreads, e.g. flavouring agents, colouring agents, emulsifiers, salt, preservative and acid.

Similarly, additives may be contained in the fat phase composition. For example, the fat phase composition may comprise a blend of triglycerides supplemented with one or more emulsifiers and/or colouring agents.

The aqueous phase composition may include some fat, but preferably the fat content of the aqueous phase composition is not higher than about 10 wt.%. It is particularly preferred that the aqueous phase composition comprises essentially no fat.

Throughout this specification the terms oil and fat are used interchangeably. They are meant to include triglycerides such as soyabean oil, sunflower oil, palm oil, fish oil, rapeseed oil, coconut oil, chemically and/or physically modified products such as hydrogenated, fractionated and/or interesterified triglyceride mixtures and mixtures of two or more thereof, as well as edible substances that are physically similar to triglycerides such as waxes, e.g. jojoba oil, and poly fatty acid esters of mono- or disaccharides, and that can be used as replacement for or in admixture with triglycerides. Preferably, the fat contained in the present spreads consists essentially of triglycerides.

The aqueous phase and/or the fat phase can suitably include emulsifiers. The amount and kind of emulsifier included are not critical. It is preferred to incorporate emulsifiers of the type and quantity as are commonly used in spreads. For example, mixtures of mono- and diglycerides derived from natural, partially hydrogenated or fully hardened sunflower oil can suitably be employed, using an amount of about 0.2 to about 0.5 wt.%, calculated on the total weight of aqueous phase and fat phase. Alternatively, other oil-compatible emulsifiers can be used. Mixtures of such emulsifiers with mono- and/or diglycerides can also be suitable as emulsifier.

Typically, the average droplet size of the dispersed aqueous phase is such that a satisfactory flavour release in the mouth can be obtained, while the product can have an adequate microbiological stability. Droplet sizes may be between about 3 µm and about 60 µm, but it may be larger or smaller than that. The average droplet size, as referred to herein, is the volume weighted mean of the droplet size distribution. It can be determined with NMR following the procedure as described in J. Colloid and Interface Science (1972), 10, 206 and (1983), 93, 521.

The average droplet size of the present spreads can be varied easily, by adjusting the conditions during the preparation.

The present spreads can suitably be used e.g. on bread as butter substitutes. However, they can also be suitable for use as complete spread on their own, for example when containing a cheese or vegetable or fruit flavours or pieces.

The following examples illustrate the invention. In the examples and throughout this specification, all percentages, parts and ratios are by weight unless indicated otherwise.

### Examples

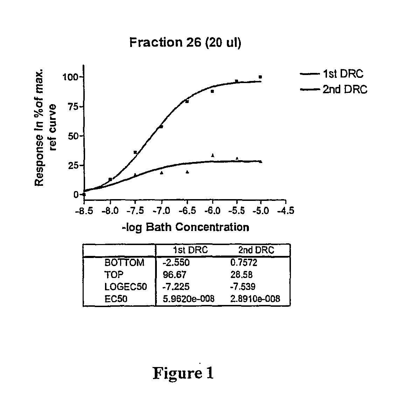

Reference is made in the examples to Figure 1.

Figure 1 shows the dose dependent contraction of rat aorta caused by phenylephrine and the inhibition of this effect by a pine needle extract of the invention.

### Example 1

### Pine needle extraction

100 g pine needles from *Pinus massoniana* (isocupressic acids (ICA) content 0.33wt%) were cleaned with water, cut into small pieces (3~4 cm) and put in a flask.

500 g hexane was added to the flask and heated under stirring to reflux (~ 60°C) for about 3 to 5h. The resulting pine needle solution was filtered through a Büchner funnel and the hexane removed using a rotary evaporator. The crude extract contains 8wt% of compounds of the isocupressic acid family. This extract was not used for further experiments.

The residue which was left after treatment with hexane was transferred to a flask and 500 ml demineralised water was added. The mixture was stirred at 100°C for about 3-5h. Then the extract was filtered through a Büchner funnel and concentrated to 150 ml. To this extract 12.5g resin (Dowex Marathon A, Polysep Industrial Consultants) was added; the temperature was maintained at 50°C for 3h. After filtration through a Büchner funnel to remove the resin, the solution was dried in a rotary evaporator to produce the pine needle powder (ICA content 0.003wt%).

### Example 2

Thoracic aortas were obtained from spontaneous hypertensive rats (SHR). The thoracic aorta is cut into rings of 4 to 6 mm in length and each ring is connected to a tension transducer in a thermostatically controlled and oxygenated organ bath containing modified Krebs-Henselheit buffer. The contractions of rings of aorta are recorded continuously under isotonic conditions. After equilibrating the tissues, a single dose of 1µM phenylephrine was given to sensitise the tissue, followed by washout. Hereafter, two cumulative dose response curves of phenylephrine were generated. The first dose response curve was obtained in the absence of an extract and served as a control curve. After thorough washing (7 times) the tissues were incubated with the pine needle extract for 1 hour. Following this incubation period, a second dose response curve was obtained in the presence of a concentrated form of the extract. The data were analysed taking the maximal response of the reference curve as a control.

Figure 1 shows that phenylephrine causes a dose dependent contraction of rat aorta (the upper curve in the Figure). After incubation with pine needle extract of Example 1, the contraction of rat aorta by phenylephrine is clearly inhibited (the lower curve in the Figure).

### Example 3

The following is an example of a spread according to the invention. The spread can be prepared according to the procedure described in Example 14 of WO 97/18320.

| Fat Phase: | | |
|---|---|---|
| Fat Blend* | 40 | % |
| Hymono 7804 (emulsifier) | 0.3 | % |
| Colour (2% β-carotene) | 0.02 | % |
| Total | 40.32 | % |

| | | |
|---|---|---|
| *87:13 by weight sunflower oil and hardstock | | |

| Aqueous Phase (to pH 5.1): | | |
|---|---|---|
| Water | 55.94 | % |
| Pine needle extract | | |
| (dry basis) | 0.5 | % |
| Skimmed Milk Powder | 1.5 | % |
| Gelatin (270 bloom) | 1.5 | % |
| Potassium Sorbate | 0.15 | % |
| Citric Acid Powder | 0.07 | % |
| Total | 59.66 | % |

### Example 4

### Preparation of extracts

Two pine needle extracts were produced. The first extract (Extract 1) is a comparative example containing isocupressic acids. The second example (Extract 2) is a purified form of the first extract and is an example of a material according to the invention.

Extract 1 was obtained as follows:
- 100 g pine needles from *Pinus massoniana* was cleaned, cut into small pieces (about 3 to 4 cm) and put into a flask
- 1 litre water was added
- The mixture was heated and maintained at reflux temperature (about 100°C) for 5h.
- The pine needle residue was removed from the mixture
- The pine needle extract (Extract 1) was obtained by removing water using a rotary evaporator.

Extract 2 was obtained by further treating Extract 1 as follows:
- 200 g pine needle extract obtained above as Extract 2 (containing ~5-10% water) was mixed with 1.21 demineralised water. This was allowed to stand in a water bath at 70 °C for half and hour to dissolve.
- The mixture was transported to a reaction vessel and stirred for 15 minutes at 70 °C.
- 40 g resin (Dowex 50 W) was added and stirring was continued for three hours at 50 °C, the mixture was then filtered. After the filtration, this step (i.e., addition of resin, stirring and filtering) was repeated.
- 0.8g of Norit SA4 active carbon was added.
- The resulting mixture was stirred for 1 hour while keeping the temperature at 85 °C.
- The resulting mixture was filtered 3 times through a Büchner filter (54; Ø185mm).
- Water was evaporated from the filtrate using a rotary evaporator to obtain Extract 2.

The general procedure for the analytical method for determining isocupressic acid (ICA) is as follows:

The sample is extracted with 50 mL methylene chloride for about three hours by means of a method based on Soxhlet extraction. After extraction, the mehylene chloride is removed via rotary evaporation. After this step, heptadecanoic acid is added as an internal standard. This component is used to be able to quantify in the end. The samples are then dissolved in a little methylene chloride and put on a SPE column containing 500 mg of aminopropyl sorbent, which has been conditioned with the appropriate solvents beforehand. After the sample has been put on the SPE column the possible present "neutral" components are eluted with a solvent containing 9:1 by volume diether ether: methanol. After this clean-up step, the acids are eluted with the same solvent but containing an additional 1% of acetic acid. After removal of the solvent in a heating block, the sample is derivatized by means of 2 M diazomethane in ether (making methyl esters of the carboxylic acid groups) and by using MSTFA (N-methyl-N-trimethylsilyltrifluoroacetamide) for silylating any free hydroxyl groups left. This derivatisation step is done in sequence. After derivatisation the sample is properly diluted using isooctane and 1 µl is injected into the GC-MS. The GC-MS uses a 30 m CP-Sil 5 column (DB-1) with an internal diameter of 0.25 mm to separate the components. Temperature programming is used: 100 C, 1 minute hold ramped to 200 C at 40 °C / min after which the temperature is ramped to 250 °C at 2 °C /min. The helium carrier gas flow is kept constant at 1.0 mL/min (= +/- 68 kPa gauge pressure at 100 °C). Splitless injection is used and the temperature of the injector is kept constant at 250 °C. MS transfer line is also kept constant at 250 °C. The MS detector was set to EI mode with an ionization energy of 70 eV. The mass range collected was from 50 to 550 Da using an electron multiplier voltage of 1250 V.

### Blood pressure lowering effects of pine needle extracts:

Reference is made in this example to Table 1.

Table 1 shows the effect of pine needle extract on
- the median effective concentration (EC₅₀) of phenylephrine and the difference between DRC1 and DRC2
- maximal effect (Eₘₐₓ) relative to phenylephrine; the lower the value the more effective the extract

Isolated aorta rings from spontaneously hypertensive rats (SHR rats) were used as a model for testing vasoactive effects. Thoracic aortas were obtained from the SHR rats. The thoracic aorta was cut into rings of 4 to 6 mm in length and each ring was then connected to a tension transducer in a thermostatically controlled and carbogentaed organ bath containing modified Krebs-Henseleit buffer. The contractions of rings of aorta were recorded continuously under isotonic conditions. After equilibrating the tissues, a single dose of 1 µM phenylephrine was given to sensitise the tissue, followed by washout. Phenylephrine is an α-adenergic agonist, and is used in this experiment to induce contraction of the aorta rings. Hereafter, two cumulative dose response curves (DRC1 and DRC2) of phenylephrine were generated. DRC was obtained in the absence of an extract and served as a control curve, while DRC2 was obtained after incubation with 50 µg/mL pine needle extract. After thorough washing the tissues were incubated with the pine needle extract for 5 minutes. Following this incubation period, a second dose response curve was obtained in the presence of a concentrated form of the extract. The data were analysed taking
- the median effective concentration (EC₅₀)
- maximal effect (Eₘₐₓ) relative to phenylephrine

The following extracts were tested:
1. *Pinus massoniana* before Norit/Ion-exchange resin treatment (Extract 1)
*2. Pinus massoniana* after Norit/Ion-exchange resin treatment (Extract 2)
3. Comparative example: Extract according to US-B1-6,329,000 (Ji Ling)
4. Comparative example: Extract according to US 5,690,984 (Lim Jung Geun)
5. Comparative example: Ether extract according to US 5,607,971 (Al-Mahmoud Mohsen)
6. Comparative example: Methylene chloride extract according to US 5,607,971 (Al-Mahmoud Mohsen)
7. Comparative example: Methanol extract according to US 5,607,971 (Al-Mahmoud Mohsen)

**Table 1**

| Extracts | logEC₅₀ control | logEC₅₀ extract | Difference logEC₅₀ | Eₘₐₓ | ICA family¹ (%) | D-quinic aicid (%) | Shikimic acid (%) | LMW sugars² |
|---|---|---|---|---|---|---|---|---|
| 1 | -7.35 | -6.31 | -1.04 | 54 | 0.30 | 9.8 | 19.8 | 26.0 |
| 2 | -6.81 | -6.08 | -0.73 | 79 | 0.00 | 15.3 | 21.0 | 27.0 |
| 3 | -7.25 | -6.49 | -0.76 | 53 | 0.02 | 4.0 | 17.0 | 23.0 |
| 4 | -7.21 | -6.88 | -0.34 | 88 | | | | |
| 5 | -7.17 | -6.43 | -0.74 | 74 | 15.33 | 0.3 | 0.6 | 0.8 |
| 6 | -7.36 | -6.16 | -1.20 | 76 | 13.68 | 0.2 | 0.0 | 0.4 |
| 7 | -7.24 | -6.47 | -0.77 | 90 | 1.93 | 1.0 | 2.3 | 12.5 |

| | | | | | | | | |
|---|---|---|---|---|---|---|---|---|
| ¹ ICA family consists of dihydroagathic acid, imbricatoloic acid, isocupressic acid, agathic acid, acetylimbricatoloic acid and acetylisocupressic acid. ²Low molecular weight sugars are monosaccharide units and include glucose, fructose and inositol structures. | | | | | | | | |

After incubation with Extract 1 the contraction of the rat aorta by phenylephrine is clearly inhibited (Emax 54). Extract 2 shows after removal of isocupressic acids by Norit treatment and ion exchange still activity (Emax 79) similar to extracts 5, 6, and 7 which are high in isocupressic acids.

### Example 5

### Preparation of margarine

Two margarines were produced under the same process conditions.

### Formulation

| **Ingredients** | **Reference (%)** | **With pine needle extract (%)** |
|---|---|---|
| ***Fat phase*** | | |
| Soybean oil | 62 | 62 |
| Soybean oil 36-38 | 9 | 9 |
| Soybean oil 45 | 6 | 6 |
| Palm oil | 4 | 4 |
| Dinodan OT | 0.6 | 0.6 |
| β-carotene | 0.02 | 0.02 |
| Flavour type 2934 | 0.02 | 0.02 |
| Subtotal | 81.64 | 81.64 |
| ***Water phase*** | | |
| Pine needle extract | 0 | 0.5 |
| Potassium sorbate | 0.15 | 0.15 |
| Citric acid | 0.07 | 0.07 |
| Skimmed milk powder | 0.25 | 0.25 |
| Flavour type 2935 | 0.02 | 0.02 |
| Salt | 0.3 | 0.3 |
| Water | 17.57 | 17.07 |
| Subtotal | 18.36 | 18.36 |

### Process conditions

The process line was set up in an AAC configuration. In this configuration the A-unit is a scraped surface heat exchanger and the C-unit is a pin mill (kneader). The volume of the C-unit was reduced to 1/3 and the numbers of the pins on the shaft of the kneader was reduced from 17 to 5. The temperatures of the product inlet, outlet and the cooling medium were registered..

### Preparation of the water phase

For preparation and pasteurizing of the water phase the mixing, dispersing and homogenizing device was used. This device had a 25 litre thermally controlled vessel with a scraped anchor agitator. During dissolving/dispersing of the dry materials of the water phase in the water, the mixture is circulated continuously and temperature of the water phase is monitored in-line in the mixing zone of the colloid mill. The mixture was pasteurized at 70 °C during 10 minutes. Afterwards the water phase was cooled down till approximately 55 °C without mixing.

### Preparation of the fat phase

During stirring, all ingredients of the fat phase were molten under nitrogen atmosphere, and heated till about 80 °C. Afterwards, the fat phase was cooled down under continuous stirring till 55 °C.

### Emulsification

The water phase was added slowly to the fat phase under intensive stirring and emulsified to a water-in-oil emulsion. During emulsification the emulsion was tempered at 55 °C for at least 30 minutes.

### Processing

A 30 kg-batch size was employed. The mix was stirred for 15 minutes before pumping. After pumping, the line was allowed to run for 15 minutes before any collection of product. During processing, the mass flow was fixed at approximately 50 kg/h. At the indicated measuring points the temperature was measured. When a stable situation was reached, 15 tubs were filled with approximately 125g margarine. The following process parameters (temperatures in °C) were recorded:

| | A₁ in | A₁ exit | C₁ in | C₁ exit | A₂ in | A₂ exit | Cool A₁ | Cool A₂ |
|---|---|---|---|---|---|---|---|---|
| Reference | 42.7 | 10.4 | 7.7 | 11.3 | 14.7 | 14.5 | -5.0 | -0.5 |
| With pine needle extract | 43.4 | 10.5 | 7.7 | 11.4 | 14.6 | 14.3 | -5.0 | -0.6 |

All tubs were placed over night at 1~3 °C and judged by a small technical panel. The margarine products were evaluated visually on color, water release, gloss external structure, sticking to knife and spreadability. Subsequently, the products were evaluated on taste, mouthfeel and tailing properties. Besides sensorial evaluation, hardness and impedance were measured as an indication of the consistency of the table margarine.

The results of the product evaluation are given in table below. The spreads containing pine needle extract had a higher c-value for hardness than standard spreads. All samples spread easily with no apparent water loss. The spreads of the invention had, in addition to increased hardness, good spreadability, good structure, good tailing and good sticking to the knife.

## Claims

1. Food product comprising a fat continuous emulsion, wherein the emulsion comprises a material comprising one or more organic compounds, said material being obtainable as an extract from pine needles, wherein the material contains compounds of the isocupressic acid family in an amount of less than 0.01 wt %, preferably less than 0.005 wt %, most preferably less than 0.003 wt %.

2. Food product as claimed in Claim 1, wherein the extract is an aqueous extract.

3. Food product according to Claim 1 or Claim 2, wherein the material comprises at least 2 components A and B, wherein A is selected from the group consisting of phytosterols, polyphenols, bioflavonoids, tannins, organic acids and their complexes, and minerals and B is selected from the group consisting of amino acids, peptides, proteins, quercetin, terpenoids, flavonol glycosides; biflavones, proanthocyanidins, polyprenols, lignans and minerals.

4. Food product according to Claim 1 or Claim 2, which comprises at least one compound A selected from the group consisting of phytosterols, polyphenols, bioflavonoids, tannins, organic acids and their complexes, and minerals, and at least one compound B selected from the group consisting of amino acids, peptides, proteins, quercetin, terpenoids, flavonol glycosides, biflavones, proanthocyanidins, polyprenols, lignans and minerals.

5. Food product according to Claim 3 or Claim 4, wherein A is present in the material in an amount of from 5 to 60 wt %, preferably 10 to 50 wt %, most preferably 15 to 40 wt % and B is present in the material in an amount of from 1 to 15 wt %, preferably 2 to 12 wt %, most preferably 3 to 10 wt %, all percentages being based on total weight of the material.

6. Food produce as claimed in any one of Claims 1 to 5, wherein the fat continuous emulsion has a fat content of from 0.5 to 99.5 wt %, preferably 20 to 85 wt %, most preferably 30 to 80 wt %.

7. Food product according to any one of Claims 1 to 6, which is margarine, a low fat spread, a bakery spread or a cooling spread.

8. Food product according to any one of Claims 1 to 7, wherein the fat phase displays a solid fat content (measured by NMR on a non-stabilised fat) at 5°C (=N5) of > 10, preferably > 20, and a solid fat content at 35°C (=N35) of < 20, preferably < 10; most preferably < 5.

9. Food product according to any one of Claims 1 to 8, comprising fat and water and having a fat content of from 0.5 to 99.5 wt %, wherein the fat phase comprises at least two components (D) and (E), (D) having all N20>20 and (E) having a content of mono- and di-unsaturated fatty acid residues of at least 25 wt %.

10. Food product according to Claim 9, wherein component (D) is selected from the group consisting of palm fractions, interesterified hardened palm oil and hardened palm kernel oil and fractions thereof, interesterified mixtures of liquid oils and hardened liquid oils, interesterified fractions of palm kernel oil and palm oil, particularly palm kernel stearine and palm oil stearine, and fractions thereof, and fat containing at least 20 wt % of SUS triglycerides.

11. Food product according to Claim 9 or Claim 10, wherein (E) has a content of mono- and di-unsaturated fatty acid residues of from 55 to 95 wt %.

12. Food product according to any one of Claim 9 to 11, wherein component (E) is selected from the group consisting of sunflower oil, high oleic sunflower oil. rape seed oil, high oleic rape seed oil, palm oil olein, corn oil, soybean oil, high oleic soybean oil.

13. Food product according to any one of Claims 1 to 12, which is essentially free of trans fatty acids.

14. Food product as claimed in any one of Claims 1 to 13, wherein the material is present in the product in an amount of from 0.05 wt % to 10 wt %, based on the total weight of the product.

15. Food product as claimed in any one of Claims 1 to 14, for use to lower blood pressure in mammals, particularly humans.

16. Food product according to any one of Claims 1 to 14, which has one or more of the following properties compared to a corresponding product that does not contain the material: increased hardness, improved texture, increased aeration, improved spreadability, improved oral properties, improved mouthfeel, improved flavour impact, better colour, improved viscosity, increased ease of processing and improved health properties.

17. Food product according to any one of the preceding claims wherein the material comprises shikimic and/or quinic acid.

18. Food product according to any one of the preceding claims wherein the material comprises shikimic acid in an amount of from 10 % to 50 % by weight of the composition.

19. Food product according to any one of the preceding claims wherein the material comprises quinic acid in an amount of from 5% to 30 % by weight of the composition.

## Patentansprüche

1. Nahrungsmittel mit einer fettkontinuierlichen Emulsion, wobei die Emulsion ein Material aufweist, das eine oder mehrere organische Verbindungen aufweist, wobei das Material als Extrakt aus Kiefernnadeln erhältlich ist, wobei das Material Verbindungen der Isocupressinsäurefamilie in einer Menge von weniger als 0,01 Gewichts-%, vorzugsweise weniger als 0,005 Gewichts-%, am meisten bevorzugt weniger als 0,003 Gewichts-% enthält.

2. Nahrungsmittel wie in Anspruch 1 beansprucht, wobei der Extrakt ein wässriger Extrakt ist.

3. Nahrungsmittel nach Anspruch 1 oder 2, wobei das Material mindestens zwei Komponenten A und B enthält, wobei A aus der Gruppe ausgewählt ist, die besteht aus Phytosterolen, Polyphenolen, Bioflavonoiden, Tanninen, organischen Säuren und deren Komplexen und Mineralien, und B aus der Gruppe ausgewählt ist, die besteht aus Aminosäuren, Peptiden, Proteinen, Querzetin, Terpenoiden, Flavonolglykosiden, Biflavonen, Proanthocyanidinen, Polyprenolen, Lignanen und Mineralien.

4. Nahrungsmittel nach Anspruch 1 oder 2, das mindestens eine Verbindung A aufweist, welche aus der Gruppe ausgewählt ist, die besteht aus Phytosterolen, Polyphenolen, Bioflavonoiden, Tanninen, organischen Säuren und deren Komplexen und Mineralien und mindestens eine Verbindung B, die aus der Gruppe ausgewählt ist, die besteht aus Aminosäuren, Peptiden, Proteinen, Querzetin, Terpenoiden, Flavonolglykosiden, Biflavonen, Proanthocyanidinen, Polyprenolen, Lignanen und Mineralien.

5. Nahrungsmittel nach Anspruch 3 oder 4, wobei A in dem Material in einer Menge von 5 bis 60 Gewichts-%, vorzugsweise 10 bis 50 Gewichts-%, am meisten bevorzugt 15 bis 40 Gewichts-% vorliegt und B in dem Material in einer Menge von 1 bis 15 Gewichts-%, vorzugsweise 2 bis 12 Gewichts-%, am meisten bevorzugt 3 bis 10 Gewichts-% vorliegt, wobei alle Prozentangaben auf dem Gesamtgewicht des Materials basieren.

6. Nahrungsmittel wie in einem der Ansprüche 1 bis 5 beansprucht, wobei die fettkontinuierliche Emulsion einen Fettgehalt von 0,5 bis 99,5 Gewichts-%, vorzugsweise 20 bis 85 Gewichts-%, am meisten bevorzugt 30 bis 80 Gewichts-% aufweist.

7. Nahrungsmittel nach einem der Ansprüche 1 bis 6, das Margarine, ein niedrigfetthaltiger Aufstrich, ein Backaufstrich oder ein Kochaufstrich ist.

8. Nahrungsmittel nach einem der Ansprüche 1 bis 7, wobei die Fettphase einen Festfettgehalt (gemessen durch NMR bei einem nichtstabilisierten Fett) bei 5°C (=N5) von > 10, vorzugsweise > 20, und einen Festfettgehalt bei 35°C (=N35) von < 20, vorzugsweise < 10, am meisten bevorzugt < 5 aufweist.

9. Nahrungsmittel nach einem der Ansprüche 1 bis 8, das Fett und Wasser aufweist und einen Fettgehalt von 0,5 bis 99,5 Gewichts-% aufweist, wobei die Fettphase mindestens zwei Komponenten (D) und (E) aufweist, wobei (D) einen N20>20 und (E) einen Gehalt von einfach und mehrfach ungesättigten Fettsäureresten von mindesten 25 Gewichts-% hat.

10. Nahrungsmittel nach Anspruch 9, wobei die Komponente (D) aus der Gruppe ausgewählt ist, die besteht aus Palmfraktionen, untereinander verestertem gehärtetem Palmöl und gehärtetem Palmkernöl und Fraktionen davon, untereinander veresterten Mischungen von flüssigen Ölen und gehärteten flüssigen Ölen, untereinander veresterten Fraktionen von Palmkernöl und Palmöl, insbesondere Palmkernstearin und Palmölstearin, und Fraktionen davon, und Fett, das mindestens 20 Gewichts-% SUS-Triglyceride aufweist.

11. Nahrungsmittel nach Anspruch 9 oder 10, wobei (E) einen Gehalt an einfach und mehrfach ungesättigten Fettsäureresten von 55 bis 95 Gewichts-% aufweist.

12. Nahrungsmittel nach einem der Ansprüche 9 bis 11, wobei die Komponente (E) aus der Gruppe ausgewählt ist, die besteht aus Sonnenblumenöl, hocholeinsäurehaltigem Sonnenblumenöl, Rapsöl, hocholeinsäurehaltigem Rapsöl, Palmölolein, Maiskeimöl, Sojaöl und hocholeinsäurehaltigem Sojaöl.

13. Nahrungsmittel nach einem der Ansprüche 1 bis 12, das im Wesentlichen frei von Transfettsäuren ist.

14. Nahrungsmittel wie in einem der Ansprüche 1 bis 13 beansprucht, wobei das Material in dem Produkt in einer Menge von 0,05 Gewichts-% bis 10 Gewichts-% basierend auf dem Gesamtgewicht des Produkts enthalten ist.

15. Nahrungsmittel wie in einem der Ansprüche 1 bis 14 beansprucht zur Verwendung zum Absenken des Blutdrucks bei Säugetieren, insbesondere Menschen.

16. Nahrungsmittel nach einem der Ansprüche 1 bis 14, das eine oder mehrere der folgenden Eigenschaften verglichen mit einem entsprechenden Produkt aufweist, das das Material nicht enthält: erhöhte Härte, verbesserte Textur, erhöhte Durchlüftung, verbesserte Streichbarkeit, verbesserte orale Eigenschaften, verbessertes Mundgefühl, verbesserte Geschmackswirkung, verbesserte Farbe, verbesserte Viskosität, verbesserte Einfachheit der Verarbeitung und verbesserte Gesundheitseigenschaften.

17. Nahrungsmittel nach einem der vorangehenden Ansprüche, wobei das Material Shikimi- und/oder Chinasäure enthält.

18. Nahrungsmittel nach einem der vorangehenden Ansprüche, wobei das Material Shikimisäure in einer Menge von 10 bis 50 Gewichts-% der Zusammensetzung enthält.

19. Nahrungsmittel nach einem der vorangehenden Ansprüche, wobei das Material Ch inasäure in einer Menge von 5 bis 30 Gewichts-% der Zusammensetzung enthält.

## Revendications

1. Produit alimentaire comprenant une émulsion grasse continue, dans lequel l'émulsion comprend un matériau comprenant un ou plusieurs composés organiques, ledit matériau pouvant être obtenu sous la forme d'un extrait d'aiguilles de pin, le matériau contenant des composés de la famille des acides isocupressiques en une quantité inférieure à 0,01 % en poids, de préférence, inférieure à 0,005 % en poids, et de manière préférée entre toutes, inférieure à 0,003 % en poids.

2. Produit alimentaire selon la revendication 1, dans lequel l'extrait est un extrait aqueux.

3. Produit alimentaire selon la revendication 1 ou la revendication 2, dans lequel le matériau comprend au moins deux composants A et B, où A est choisi dans le groupe constitué des phytostérols, des polyphénols, des bioflavonoïdes, des tanins, des acides organiques et leurs complexes, et des minéraux et B est choisi dans le groupe constitué des acides aminés, des peptides, des protéines, de la quercétine, des terpénoïdes, des flavonol glycosides, des biflavones, des proanthocyanidines, des polyprénols, des lignanes et des minéraux.

4. Produit alimentaire selon la revendication 1 ou la revendication 2, qui comprend au moins un composé A choisi dans le groupe constitué des phytostérols, des polyphénols, des bioflavonoïdes, des tanins, des acides organiques et leurs complexes, et des minéraux et au moins un composé B choisi dans le groupe constitué des acides aminés, des peptides, des protéines, de la quercétine, des terpénoïdes, des flavonol glycosides, des biflavones, des proanthocyanidines, des polyprénols, des lignanes et des minéraux.

5. Produit alimentaire selon la revendication 3 ou la revendication 4, dans lequel A est présent dans le matériau en une quantité de 5 à 60 % en poids, de préférence, de 10 à 50 % en poids, et de manière préférée entre toutes, de 15 à 40 % en poids et B est présent en une quantité de 1 à 15 % en poids, de préférence, de 2 à 12 % en poids, et de manière préférée entre toutes, de 3 à 10 % en poids, tous les pourcentages étant basés sur le poids total du matériau.

6. Produit alimentaire selon l'une quelconque des revendications 1 à 5, dans lequel l'émulsion de matière grasse continue a une teneur de matière grasse de 0,5 à 99,5 % en poids, de préférence, de 20 à 85 % en poids, et de manière préférée entre toutes, de 30 à 80 % en poids.

7. Produit alimentaire selon l'une quelconque des revendications 1 à 6, qui est la margarine, un produit à tartiner à faible teneur de matière grasse, un produit à tartiner de type boulangerie ou un produit à tartiner à cuire.

8. Produit alimentaire selon l'une quelconque des revendications 1 à 7, dans lequel la phase grasse présente une teneur en matière grasse solide (mesurée par RMN sur une matière grasse non stabilisée) à 5°C (=N5) > 10, de préférence, > 20 et une teneur en matière grasse solide à 35°C (=N35) < 20, de préférence, < 10, et de manière préférée entre toutes < 5.

9. Produit alimentaire selon l'une quelconque des revendications 1 à 8, comprenant une matière grasse et de l'eau et ayant une teneur en matière grasse de 0,5 à 99,5 % en poids, dans lequel la phase grasse comprend au moins deux composants (D) et (E), (D) ayant un N20 >20 et (E) ayant une teneur en résidus d'acides gras mono- et di-insaturés d'au moins 25 % en poids.

10. Produit alimentaire selon la revendication 9, dans lequel le composant (D) est choisi dans le groupe constitué de fractions de palme, d'huile de palme durcie interestérifiée et d'huile de palmiste durcie et fractions de celles-ci, de mélanges interestérifies d'huiles liquides et d'huiles liquides durcies, de fractions interestérifiées d'huile de palmiste et d'huile de palme, en particulier, de stéarine d'huile de palmiste et de stérarine d'huile de palme, et fractions de celles-ci, et de matières grasses contenant au moins 20 % en poids de triglycérides SUS.

11. Produit alimentaire selon la revendication 9 ou la revendication 10, dans lequel (E) a une teneur de résidus d'acides gras mono- et di-insaturés de 55 à 95 % en poids.

12. Produit alimentaire selon l'une quelconque des revendications 9 à 11, dans lequel le composant (E) est choisi dans le groupe constitué de l'huile de tournesol, de l'huile de tournesol à forte teneur oléique, de l'huile de pépins de raisin, de l'huile de pépins de raison à forte teneur oléique, d'oléine d'huile de palme, de l'huile de maïs, de l'huile de soja, de l'huile de soja à forte teneur oléique.

13. Produit alimentaire selon l'une quelconque des revendications 1 à 12, qui est essentiellement dépourvu d'acides gras trans.

14. Produit alimentaire selon l'une quelconque des revendications 1 à 13, dans lequel le matériau est présent en une quantité de 0,05 à 10 % en poids, sur la base du poids total du produit.

15. Produit alimentaire selon l'une quelconque des revendications 1 à 14, pour une utilisation pour abaisser la pression sanguine chez les mammifères, en particulier, chez l'homme.

16. Produit alimentaire selon l'une quelconque des revendications 1 à 14, qui a une ou plusieurs des propriétés suivantes, comparé à un produit correspondant qui ne contient pas le matériau : dureté accrue, texture améliorée, aération accrue, aptitude à l'étalement accrue, propriétés orales améliorées, sensation en bouche améliorée, impact des arômes amélioré, plus belle couleur, viscosité améliorée, facilité de traitement accrue et propriétés diététiques améliorées.

17. Produit alimentaire selon l'une quelconque des revendications précédentes, dans lequel le matériau comprend de l'acide shikimique et/ou quinique.

18. Produit alimentaire selon l'une quelconque des revendications précédentes, dans lequel le matériau comprend de l'acide shikimique en une quantité de 10 à 50 % en poids de la composition.

19. Produit alimentaire selon l'une quelconque des revendications précédentes, dans lequel le matériau comprend de l'acide quinique en une quantité de 5 à 30 % en poids de la composition.
